# EUROPEAN PATENT APPLICATION

(11) **EP 0 981 938 A1**
(43) Date of publication of application: **01.03.2000**
(21) Application number: 99202684.9
(22) Date of filing: 19.08.1999
(51) Int. Cl.: A01C 15/00

(54) **An implement for spreading material**

(30) Priority: 26.08.1998 NL 1009950
(71) Applicant: MAASLAND N.V., 3155 PD Maasland (NL)
(72) Inventor: Van der Lely, Alexander, 3065 NA Rotterdam (NL); Bom, Cornelis Johannes Gerardus, 3181 VC Rozenburg (NL)
(74) Representative: Corten, Maurice Jean F.M.

(57) **Abstract**

An implement for spreading material comprises a frame (5) provided with a hopper (1, 2) for the material to be spread and a spreader member (3). The outside of the hopper (1, 2) is provided with a moulded edge (4), extending on all sides, for discharging water. A part of the moulded edge (4) can be connected to the frame (5). In this manner the hopper (1, 2) is supported by the frame (5) by means of the moulded edge (4).

## Description

The invention relates to an implement as claimed in the preamble of claim 1. In such implements, especially when using hydrophilic substances, such as fertilizer, the phenomenon occurs that water gathers on the outside of the hopper. At the bottom side of the hopper, said water may penetrate into a metering device of the spreader member, resulting in an undesired blockage. For the purpose of avoiding this, it is known to provide around the hopper a moulded edge preventing the water from flowing all the way downwards. The known implements have inter alia the disadvantage that fastening such a moulded edge in a durable and solid manner is not so easy. Furthermore, additional means are required for fastening the hopper to the frame.

The invention aims inter alia at obviating the above-mentioned drawbacks and at providing an improved implement. According to the invention, this is achieved by means of the measures mentioned in the characterizing part of claim 1. A part of the moulded edge has a double function: on the one hand, the frame is fastened thereto so that the hopper is supported, and, on the other hand, it serves to the discharge of water. Thus there is realized a very solid construction in a simple and cheap manner. Moreover, by fastening the frame to the moulded edge, it is not necessary to bore holes into the hopper for fastening purposes.

The invention will now be explained in further detail with reference to the accompanying drawings.
Figure 1 is a schematic side view of the implement according to the invention, and
Figure 2 is a schematic rear view of the implement.

The invention relates to an implement for spreading material, such as fertilizer or material to be applied on roads or in road building (salt, sand, gravel, etc.), for example. Such implements usually comprise a frame provided with at least one hopper for the material to be spread and at least one spreader member (known per se). The frame on which the hopper with the spreader member is disposed can be connected to a tractor, for example.

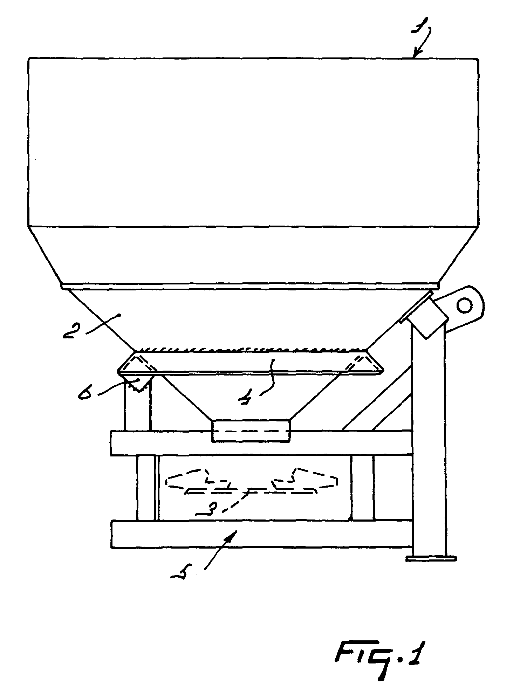

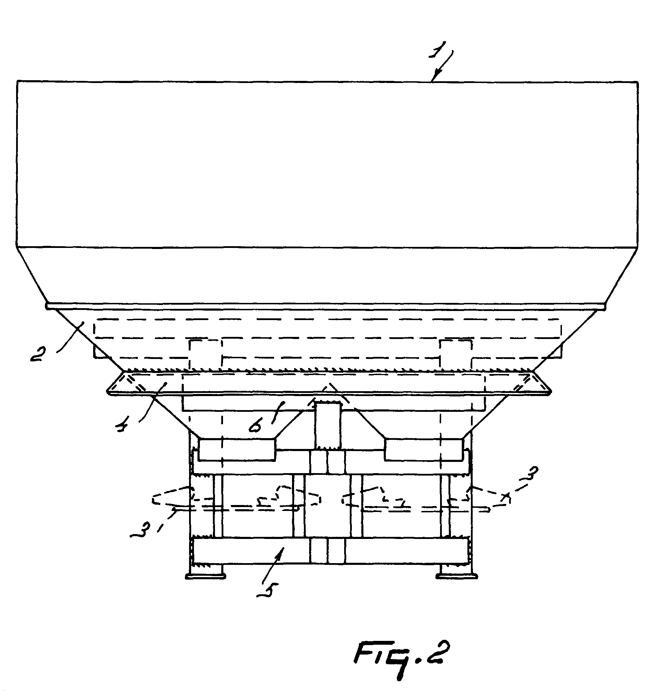

Figure 1 is a schematic side view of the implement according to the invention. The upper side of the hopper 1 has a substantially rectangular shape. As is apparent from Figure 2, the bottom side of the hopper 1 comprises two elements 2 having approximately the shape of a pyramid and debouching each into an outlet aperture corresponding to a spreader member 3 that is indicated by dotted lines. The outside of the hopper 1, 2 is provided with a moulded edge 4 extending on all sides and being welded to the hopper 1, 2. Said moulded edge 4 serves to prevent water flowing downwards along the hopper 1, 2 from penetrating into a metering device of the spreader member 3. The water flows on the moulded edge 4 and subsequently drips downwards.

The moulded edge 4 is preferably disposed near the bottom side of the hopper 1, 2 above the metering device (non-shown and known per se). A part of the moulded edge 4 can be connected to the frame 5 in such a manner that the connection can be detached. This is possible by means of a screwed connection, for example. For that purpose the frame is provided with a horizontally extending beam or tube 6 having preferably a square or rectangular cross-section, one side of which (in Figure 1: above on the right) is adapted to support the hopper 1, 2, and a further side of which (in Figure 1: above on the left) is adapted to be connected with the moulded edge 4. Consequently, one side of the lower part 2 of the hopper 1, 2, which lower part 2 has the shape of a pyramid, bears on a side of said beam 6, while a part of the moulded edge 4 bears on another side of the beam 6 and can be connected thereto.

The moulded edge 4 is disposed on the hopper 1, 2 so as to form a discharge surface for the water, said discharge surface extending substantially perpendicular to the hopper 1, 2. In this manner the water is discharged in an efficient manner. The moulded edge 4 is preferably disposed on the hopper 1, 2 in such a manner that the water is discharged around the spreader member 3.

(For a further illustration of the invention, Figure 2 shows the implement in rear view).

## Claims

1. An implement for spreading material, such as fertilizer, which implement comprises a frame (5) provided with a hopper (1, 2) for the material to be spread and at least one spreader member (3), characterized in that the outside of the hopper (1, 2) is provided with a moulded edge (4), extending substantially on all sides, for discharging water, while at least a part of the moulded edge (4) can be connected to the frame (5).

2. An implement as claimed in claim 1, characterized in that the moulded edge (4) is disposed near the bottom side of the hopper (1, 2) above a metering device.

3. An implement as claimed in claim 1 or 2, characterized in that the moulded edge (4) is welded to the hopper (1, 2).

4. An implement as claimed in any one of claims 1 - 3, characterized in that a part of the moulded edge (4) can be connected to the frame (5) by means of a detachable connection, such as a screwed connection.

5. An implement as claimed in any one of claims 1 - 4, characterized in that the frame (5) is provided with a beam (6) having a square or rectangular cross-section, one side of which is adapted to support the hopper (1, 2) and another side of which is adapted to be connected to the moulded edge (4).

6. An implement as claimed in any one of claims 1 - 5, characterized in that the moulded edge (4) is disposed on the hopper (1, 2) so as to form a discharge surface for the water, said discharge surface extending substantially perpendicular to the hopper (1, 2).

7. An implement as claimed in any one of claims 1 - 6, characterized in that the moulded edge (4) is disposed on the hopper (1, 2) in such a manner that the water is discharged around the spreader member (3).
